# EUROPÄISCHE PATENTSCHRIFT

(11) **EP 1 374 660 B1**
(45) Veröffentlichungstag und Bekanntmachung des Hinweises auf die Patenterteilung: **01.08.2007**
(21) Anmeldenummer: 03013906.7
(22) Anmeldetag: 20.06.2003
(51) Int. Cl.: A01D 34/00, A01D 34/685

(54) **Mähwerk**
Mowing device
Dispositif de fauchage

(30) Priorität: 25.06.2002 US 179548
(43) Veröffentlichungstag der Anmeldung: 02.01.2004
(73) Patentinhaber: DEERE & COMPANY, Moline, Illinois 61265-8098 (US)
(72) Erfinder: Schmidt, Michael Todd, Holly Springs, NC 27540 (US); Kelly, Brian Charles, Apex, NC 27502 (US); Palmer, James Anthony, Raleigh, NC 27603 (US); Adkins, Brain Matthew, Apex, NC 27502 (US)
(74) Vertreter: Magin, Ludwig Bernhard

(56) Entgegenhaltungen:
- US-A- 4 226 074
- US-A- 5 205 112
- US-A- 5 465 564
- US-A- 5 628 171

## Beschreibung

Die Erfindung betrifft ein Mähwerk mit wenigstens einer Auswurföffnung und wenigstens zwei Mähkammern, in denen jeweils wenigstens ein Mähbalken derart anordenbar ist, dass er um eine zumindest im Wesentlichen vertikale Achse rotieren kann, sowie einer Mehrzahl von Abweisern.

Es sind zumindest zwei Arten von Mähwerken bekannt. Eine erste Art von Mähwerk ist üblicherweise als ein Seitenauswurf- oder Heckauswurfmähwerk ausgebildet. Mit anderen Worten, nachdem Gras oder anderer Pflanzenwuchs geschnitten wurde, wird dieses/dieser in dem Mähwerk zirkuliert und Richtung einer Auswurföffnung gefördert, um von dort ausgeworfen zu werden. Bei der zweiten Art Mähwerk handelt es sich um ein Mulchmähwerk. Diese Art von Mähwerk weist keine Auswurföffnung auf. Das Gras wird geschnitten und in einer geschlossenen Mähkammer zerkleinert, um schließlich durch die Mähmesser auf dem Untergrund abgelegt bzw. in die Vegetation eingeblasen zu werden. Dieser Vorgang bietet den Vorteil, dass das fein zerkleinerte Mähgut als ein natürlicher Dünger dient und es darüber hinaus nicht notwendig ist, das Mähgut zusammenzuharken und/oder aufgesammeltes Mähgut zu entsorgen.

Es sind sogenannte Kits oder Umrüstsatze bekannt, wie sie beispielsweise in der US-A-5,628,171 gezeigt werden, durch welche ein Mähwerk mit einer Auswurföffnung in ein zum Mulchen geeignetes Mähwerk umgewandelt werden kann. Zum Umrüsten muss eine Bedienungsperson den Mähbetrieb unterbrechen und das Mähwerk in eine Wartungsposition bringen. Dies ist unbequem und zeitaufwändig. Darüber hinaus kann es notwendig werden, einen derartigen Nachrüstsatz bei entsprechenden Umgebungsbedingungen, beispielsweise, wenn das zu schneidende Gras besonders hoch, dicht oder aber auch feucht ist, so dass ein gutes Mulchergebnis nicht zu erwarten ist, wieder zu entfernen. Wird beispielsweise um den zusätzlichen Zeitaufwand, der zum Entfernen eines solchen Umrüstsatzes notwendig wäre, zu vermeiden, unter derartigen Bedingungen gemulcht, kann es zu einem Verstopfen der Mähkammer kommen, was zumindest die Schnittqualität reduziert oder auch ein Unterbrechen des Mähbetriebes erzwingen kann, um die Verstopfung manuell zu entfernen.

Die US-A-4,226,074 zeigt ein gattungsgemäßes Mähwerk, welches zwei Abweiser aufweist, die zwischen einer Auswurf- und einer Mulchstellung verschwenkt werden können. Die Abweiser sind jeweils an einer drehbaren Stange angebracht, welche sich durch eine Lagerhülse nach oben, über das Mähwerk hinaus erstrecken und dort derart gebogen sind, dass sie jeweils einen Griff bilden, mittels dem die jeweilige Stange einzeln verschwenkt werden kann.

Das der Erfindung zugrunde liegende Problem wird darin gesehen, das bekannte Mähwerke nur für eine bestimmten Einsatzbereich geeignet sind bzw. Mähwerke, welche mit Hilfe eines Umrüstsatzes zu Mulchmähwerken umgerüstet werden können, aufwändig in der Handhabung sind.

Dieses Problem wird erfindungsgemäß durch die Lehre des Patentanspruchs 1 gelöst, wobei in den weiteren Patentansprüchen die Lösung in vorteilhafter Weise weiterentwickelnde Merkmale aufgeführt sind.

Auf diese Weise wird ein Mähwerk zur Verfügung gestellt, welches in Abhängigkeit von den Umgebungsbedingungen oder auch den Vorlieben einer Bedienungsperson bzw. dem gewünschten Mähergebnis als Auswurfmähwerk oder als Mulchmähwerk eingesetzt werden kann. Das Mähwerk ist hierzu mit Abweisern versehen, welche in unterschiedliche Stellungen gebracht werden können. Die Abweiser sind mit dem Mähwerk vorzugsweise dauerhaft verbunden, so dass es nicht notwendig ist, einen oder mehrere Umrüstsätze mit sich zu führen, um einen Umbau durchführen zu können, und auch keine solchen Umrüstsätze bzw. deren Einzelteile aufzubewahren sind. Die Abweiser können eine erste Stellung einnehmen, in der die Mähkammern umfangsmäßig zumindest im Wesentlichen geschlossen sind, und in der das Mähwerk somit zum Mulchen geeignet ist. Die Abweiser können aber auch eine zweite Stellung einnehmen, in der ein Übergang von Mähgut von einer Mähkammer in die andere und ein Auswurf des geschnittenen Mähguts durch eine Auswurföffnung möglich ist, und das Mähwerk somit in einem Auswurfmodus betrieben werden kann. Neben diesen beweglichen Abweisern können an dem Mähwerk auch weitere bzw. fest mit dem Mähwerk oder den Mähkammern verbundene Abweiser vorgesehen sein, welche mit den beweglichen Abweisern zusammenwirken können, aber nicht notwendigerweise müssen. Ein derartiges Mähwerk kann zwei oder mehr, beispielsweise drei Mähkammern aufweisen, wobei die Auswurföffnung beispielsweise in einem Seitenbereich des Mähwerks bzw. einer seiner Mähkammern oder in einem rückwärtigen Bereich (Heckauswurf) vorgesehen sein kann. Mähwerke werden beispielsweise an selbstfahrenden Geräten, wie Rasentraktoren oder Aufsitzmähern etc. verwendet, wo sie beispielsweise in einem Front- oder Heckbereich oder unterhalb des Geräts vorgesehen sein können. Solche Geräte können auch mit mehreren Mähwerken ausgestattet sein. Mähwerke werden aber auch an handgeführten oder handgeschobenen Geräten eingesetzt.

Ist wenigstens einer der Abweiser in seiner zweiten Stellung parallel zu einer Außenwand des Mähwerks bzw. einer Mähkammer ausgerichtet, so ragt er nicht in den Mähgutstrom hinein und lenkt diesen somit nicht ab. Der Mähgutstrom kann somit ungehindert durch den jeweiligen Mähbalken in die nächste Mähkammer oder durch die Auswurföffnung aus dem Mähwerk hinaus gefördert werden.

Überlappen sich zwei oder mehrere Abweiser in ihrer zweiten Stellung, so bilden sie eine zumindest im Wesentlichen glatte Fläche, an der der Mähgutstrom ungehindert entlanggleiten kann. Dies ist insbesondere der Fall, wenn die/der Abweiser, wie es zuvor beschrieben wurde, zumindest im Wesentlichen parallel zu einer Außenwand des Mähwerks bzw. einer der Mähkammern angeordnet ist. Überlappen sich die Abweiser derart, dass sie dem Mähgutstrom keine Kante entgegensetzten, so wird einem Anlagern von Mähgut und somit einer Klumpenbildung, welche durch abfallende Klumpen zu einem unschönen Mäheindruck führen kann, oder auch einem Verstopfen des Mähwerks entgegengewirkt.

Wirken die Abweiser mit einer Stelleinrichtung zusammen, so können sie durch diese gemeinsam bewegt werden. Eine derartige Stelleinrichtung kann einen Motor aufweisen bzw. mit einem solchen zusammenwirken. In einfacher Weise wird sie aber manuell durch eine Bedienungsperson betätigt.

Es ist denkbar, die Abweiser verschiebbar vorzusehen. Hierbei könnte es beispielsweise vorteilhaft sein, die Abweiser aus dem Mähwerksgehäuse und somit aus dem Mähgutstrom und dem Wirkungsbereich der Messerbalken herauszuziehen. Eine einfache und platzsparende Anordnung ergibt sich aber, wenn die Abweiser mit dem Mähwerk, insbesondere einer Oberseite bzw. Abdeckung des Mähwerks gelenkig bzw. schwenkbar verbunden sind. Um ein gutes Zusammenwirken der Abweiser zu erzielen oder aber um eine indirekte Betätigung einzelner Abweiser zu ermöglichen, können auch einzelne oder auch alle Abweiser miteinander gelenkig verbunden sein.

Insbesondere wenn die Stellvorrichtung manuell betätigt werden kann, kann diese einen Griff umfassen, welcher durch eine Bedienungsperson ergriffen und verstellt werden kann.

Um die Bewegung des Griffs an die Abweiser zu übertragen, können mit dem Griff Hebel verbunden sein, welche vorzugsweise schwenkbar mit dem Mähwerk und miteinander über ein oder mehrere Gestänge verbunden sind.

Um Sicherzustellen, dass die Stellvorrichtung eine bestimmte Stellung, welche insbesondere der ersten und/oder der zweiten Stellung der Abweiser entsprechen kann, einnimmt, kann der Griff derart durch einen Halter geführt werden, dass er in wenigstens einer Stellung festlegbar ist. Dies ist beispielsweise durch eine Rastmechanismus umsetzbar. Es kann insbesondere vorgesehen sein, dass an dem Griff ein beispielsweise durch eine Betätigung eines Druckschalters o.ä. verschiebbarer Stift selektiv in eine Vertiefung oder Kerbe an dem Halter eingreift.

In der Zeichnung ist ein nachfolgend näher beschriebenes Ausführungsbeispiel der Erfindung dargestellt. Es zeigt:
- Fig. 1: ein Mähgerät mit einem Mähwerk,
- Fig. 2: das Mähwerk aus Fig. 1 von oben betrachtet, mit einer an der Oberseite vorgesehenen Stellvorrichtung, welche sich in einer Stellung befindet, in der das Mähwerk sich in einem Auswurfmodus befindet,
- Fig. 3: das Mähwerk von unten betrachtet, wobei der Blick auf Abweiser freigegeben wird, welche in dieser Figur derart angeordnet sind, dass das Mähwerk zu einem Auswurfbetrieb geeignet ist,
- Fig. 4: eine Ansicht gemäß Fig. 2, wobei die Stellvorrichtung eine Stellung einnimmt, in der das Mähwerk zum Mulchen geeignet ist,
- Fig. 5: eine Ansicht der Unterseite des Mähwerks, wobei die Abweiser gemäß der Stellung der Stellvorrichtung gemäß Fig. 2 angeordnet sind,
- Fig. 6: eine vergrößerte Darstellung eines Griffs und eines Halters der Stellvorrichtung im Schnitt entlang der Linie 6-6 aus Fig. 2 und
- Fig. 7: eine Darstellung des Griffs und des Halters im Schnitt entlang der Linie 7-7 aus Fig. 4.

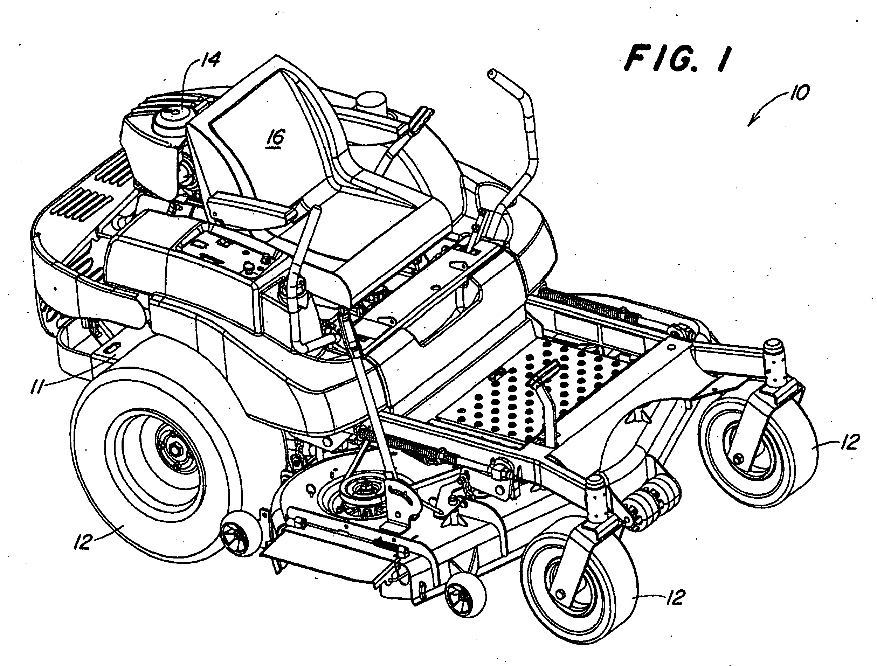

Es wird zuerst Bezug auf Figur 1 genommen, in der ein Mähgerät 10 mit einem Rahmen gezeigt wird, welcher sich auf am Untergrund angreifenden Rädern 12 abstützt. Das Mähgerät 10 wird durch einen Motor 14 angetrieben, welcher hinter einem Bedienersitz 16 angeordnet ist. Ein Mähwerk 18 (welches, im Folgenden genauer besprochen werden wird) ist an einem Frontbereich des Mähgeräts 10 vorgesehen, um Pflanzenwuchs entweder in einem Auswurf- oder einem Mulchmodus zu mähen.

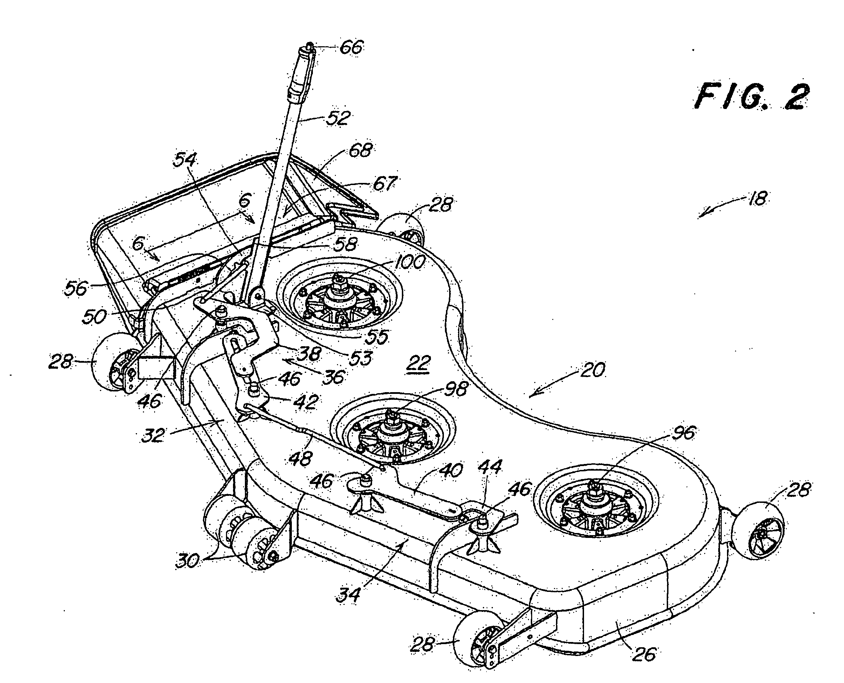

In Figur 2 wird ein Mähwerk 18 mit mehreren Mähkammern gezeigt, welches an dem Mähgerät 10 aus Figur 1 angebracht werden kann.

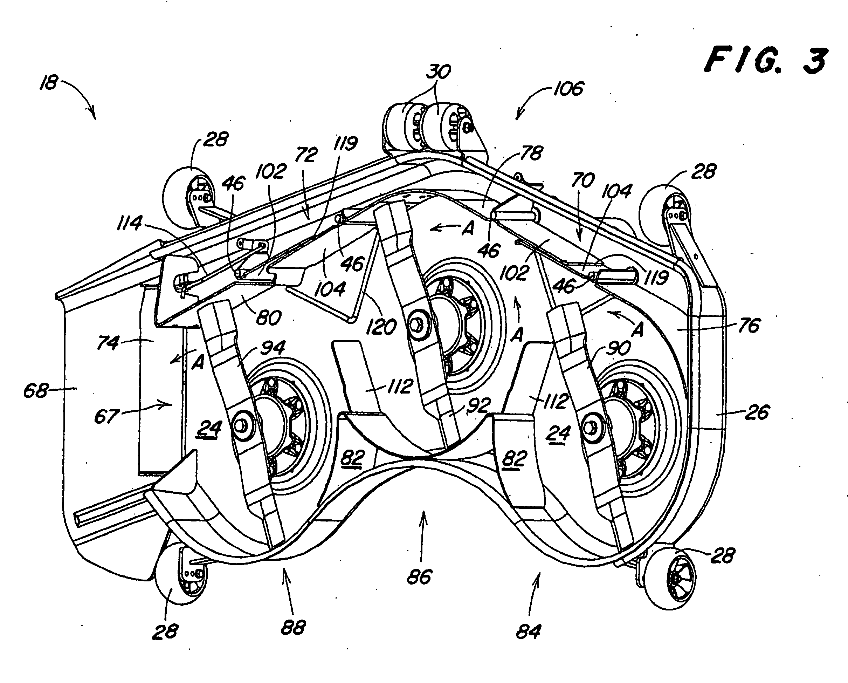

Das Mähwerk 18 weist eine Abdeckung 20 mit einer Oberseite 22 und einer Unterseite 24 (siehe Figur 3) auf. Das Mähwerk 18 weist weiter eine Schürze 26 auf, welche sich von der Abdeckung 20 nach unten erstreckt. Die Schürze 26 bildet eine Außen- oder Seitenfläche des Mähwerks 18, von welcher sich eine Mehrzahl von Rädern, einschließlich derartiger Räder 28, 30, welche ein Einschneiden in den Untergrund verhindern, wegerstrecken, um das Mähwerk 18 daran zu hindern, zu dicht an den Untergrund heranzukommen, wenn es über unebene Untergrundbereiche geführt wird.

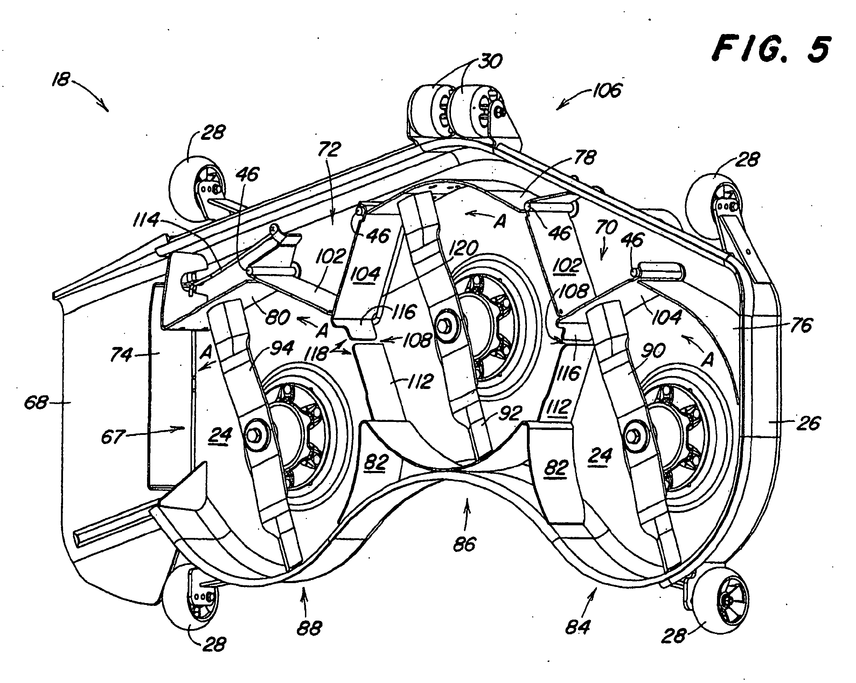

An der Oberseite 22 wird auch eine daran angebrachte Steuer- bzw. Stellvorrichtung 32 gezeigt, durch welche eine Mehrzahl daran angebrachter Abweiser (im Folgenden genauer dargestellt) zwischen offenen und geschlossenen Positionen bewegt oder verlagert werden können. Wenn weiterhin auf Figur 2 Bezug genommen wird, kann gesehen werden, dass die Stellvorrichtung 32 einen Satz linker und rechter Hebel 34, 36 aufweist. Die Hebel 34, 36 weisen Antriebselemente 38, 40 und entsprechende Hebelfolger 42, 44 auf. Jedes dieser Elemente, d.h. jeder Hebel 34, 36 und jeder Hebelfolger 42, 44, ist auf eine Schwenkachse 46 aufgesetzt. Die Hebel 34, 36 sind über eine Stange oder ein Gestänge 48 verbunden. Der rechte Hebel 36 ist auch über eine Stange 50 mit einem Griff 52 verbunden, welcher verwendet wird, um den Satz von Hebel 34, 36 und die ihnen zugeordneten Abweiser, welche in den Figuren 3 und 5 gezeigt werden, zu bewegen.

Wie es aus Figur 1 ersichtlich ist, kann der Griff von dem Bedienersitz 16 aus erreicht werden. Die Möglichkeit den Griff 52 von dem Bedienersitz 16 aus zu erreichen und zu bewegen, erlaubt während eines Mähbetriebs ein leichtes Umschalten zwischen einem Auswurf- und einem Mulchbetrieb.

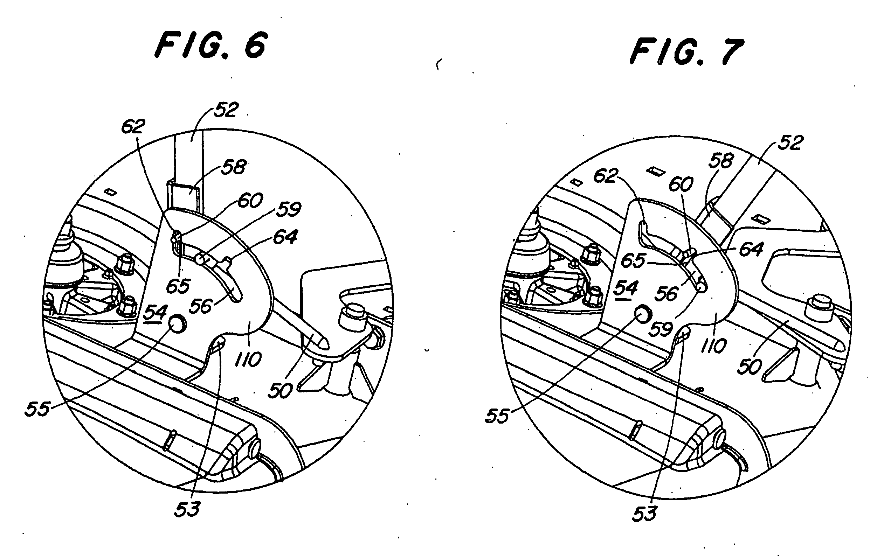

Es werden nun auch die Figuren 6 und 7 betrachtet, aus denen hervorgeht, dass der Griff 52 an dem Mähwerk 18 über ein Paar von Haltern 53, 54 und einen Schwenkstift 55 angebracht ist.

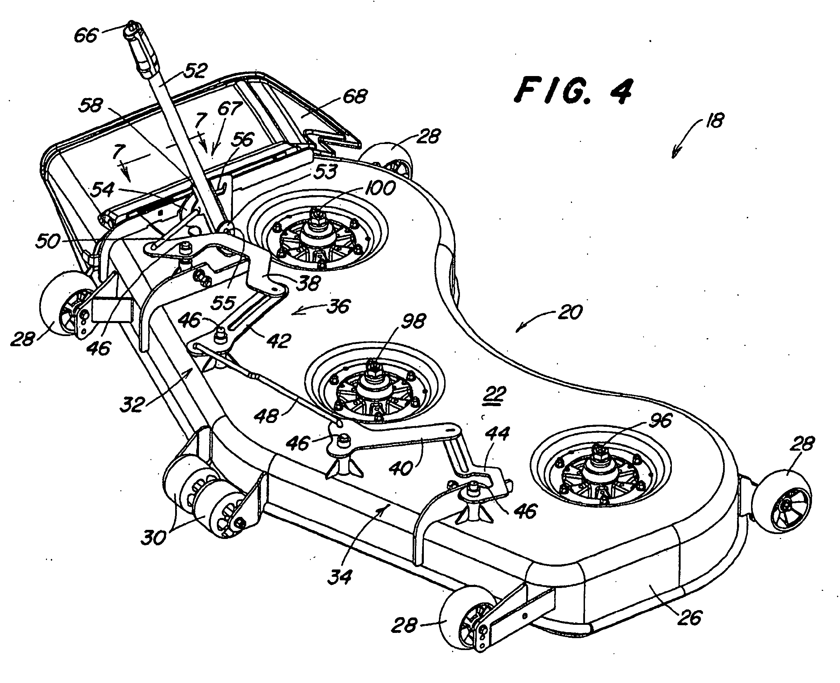

Der Griff 52 weist einen Halter 58 auf, welcher an seiner Außenseite angebracht bzw. mit dieser verschweißt ist. Ein Endbereich 59 der Stange 59 erstreckt sich durch den Halter 58 und in einen Schlitz 56 in dem Halter 54, um sich in dem Schlitz 56 zu bewegen. Die sich in dem Schlitz 56 bewegende Stange 50 begrenzt die Bewegungsmöglichkeit des Griffs 52 in einer Richtung. Der Griff 52 weist darüber hinaus einen Stift 60 auf, welcher sich von diesem weg und in einen Schlitz 56 hinein erstreckt. Der Stift 60 kann in Vertiefungen oder Kerben 62, 64, welche in dem Halter 64 vorgesehen sind, eingerastet werden, um den Griff 52 und somit die Stellvorrichtung 32 in Position zu halten. Der Stift 60 kann in einem vertikalen Schlitz 65, welcher in der Außenfläche des Griffs 52 und des an ihm angebrachten Halters 58, wie dies in Figur 6 gezeigt wird, vorgesehen ist, nach oben und unten bewegt werden. Ein Betätigungsknopf 66 an dem oberen Endbereich des Griffs 52 steuert, wie es am Deutlichsten in den Figuren 2 und 4 gezeigt wird, eine Bewegung des Stifts 60. Ein Herunterdrücken des Betätigungsknopfes 66 löst den Stift 60 aus seinem Eingriff in einer der Kerben 62 oder 64. Danach kann der Griff 52 bewegt werden, um die Abweiser 70, 72, 74, 76, 78, 80 zwischen ihren offenen und geschlossenen Stellungen zu bewegen.

Wird nun als Nächstes die Unterseite des Mähwerks 18, wie sie in Figur 3 gezeigt wird, betrachtet, sieht man die Verschlusselemente oder Abweiser 70, 72, 74. Darüber hinaus wird eine Sammlung von vorderen Abweisern 76, 78, 80 und ein rückwärtiger Abweiser 82 sichtbar, welche an der Unterseite 24 des Mähwerks 18 vorgesehen sind. Die Abweiser 70, 72, 74, 76, 78, 80 und 82 erstrecken sich von der Schürze 26 weg und bilden zusammen mit der Schürze 26 eine im Wesentlichen durchgängige Wand bzw. ein Wandelement, welches im Wesentlichen drei aneinander angrenzende Mähkammern 84, 86, 88 bestimmt. Es wird angemerkt, das die Art und Weise in welcher die Wand geformt ist, keinen Teil der vorliegenden Erfindung darstellt.

Wie es weiter in Figur 3 gezeigt wird, ist einer von drei Messerbalken 90, 92 und 94 in einer einzelnen Mähkammer 84, 86, 88 angeordnet. Jeder dieser Messerbalken 90, 92, 94 wird durch den Motor 14 angetrieben und ist auf einer entsprechenden Spindel 96, 98 oder 100 angeordnet, wie dies beispielsweise in Figur 2 gezeigt wird, um mit dieser zu rotieren. Es wird nun wieder auf Figur 3 Bezug genommen. Wenn die Messerbalken 90, 92 und 94 rotieren wird Pflanzenwuchs geschnitten und entlang eines Pfades "A" gefegt, welcher sich zwischen dem Mähkammern 84, 86, 88 erstreckt und welcher sich durch eine Auswurföffnung 67 fortsetzt, welche entlang der Schürze 26 der Wand gebildet wird. Das Mähgut bewegt sich zwischen den Mähkammern 84, 86, 88 und durch die Auswurföffnung 67 hinaus, da die Abweiser 70 und 72 im Wesentlichen mit den Frontabweisern bzw. vorderen Abweisern 76, 78 und 80 und der Abweiser 74 im Wesentlichen mit der Oberseite 22 des Mähwerks 28 fluchtet. Diese Ausrichtung entspricht einer offenen Stellung der Abweiser 70, 72, 74.

Wie dies auch in Figur 3 gezeigt wird, werden die Abweiser 70 und 72 durch Paare von Platten 102, 104 gebildet. Die Platten 102, 104 sind mit den Schwenkachsen 46 verbunden, um zu verschwenken, wenn die Antriebselemente und Hebelfolger 38, 40, 42 und 44 als Folge einer Bewegung des Griffs 52 bewegt werden. Jedes der Paare von Platten 102, 104 ist in eine offene Stellung oder in Richtung des Bugs 106 des Mähwerks 18 schwenkbar, um es Mähgut zu erlauben, zu der Auswurföffnung 67 zu gelangen. Sie können auch in eine geschlossenen Stellung oder weg von dem Bug 106 geschwenkt werden. In dieser Stellung versperren die Platten 102, 104 den Pfad "A". Wie es oben angeführt wurde, erstrecken sich die Abweiser 70 und 72, welche durch die Platten 102 und 104 gebildet werden, winklig oder stehen von Bereichen der Wand ab und der Abweiser 74 versperrt die Auswurföffnung 67. Dies beschränkt den Mähgutstrom, um so eine Mähwerkkonfiguration zu erlauben, die an ein Mulchen angepasst ist, und wie sie mit Bezug zu den Figuren 4 - 5 gezeigt und unten besprochen wird.

In der bevorzugten Ausführungsform stellen die Abweiser, wenn sie sich in ihrer geschlossenen Stellung befinden eine umfangsmäßig niedrigere Peripherie zur Verfügung, welche unter die Schnittebene, welche durch die Messerbalken 90, 92, 94 bestimmt wird, zurückfällt. Wenn sich die Abweiser in ihrer geschlossenen Stellung befinden, umschließen sie und die Wand die Messerbalken 90, 92, 94 im Wesentlichen und stellen dadurch die notwendige Rezirkulation für einen Mulchbetrieb zu Verfügung. Während die bevorzugte Ausführungsform Abweiser 70, 72, 74, 76, 78, 80 verwendet, welche eine kleine Öffnung 108 in dem Mähkammerumfang belassen, wie dies in Figur 5 gesehen werden, beeinträchtigt diese Öffnung 108 die Mulchfähigkeit der jeweiligen Mähkammer nicht wesentlich. Es soll deutlich sein, dass Abweiser 70, 72, 74, 76, 78, 80, 82 mit anderen wirksamen Ausbildungen zur Erreichung dieses Ziels verwendet werden können.

Mit Bezug auf die Figuren 4 - 5 wird das Mähwerk 18 in seinem Mulchmodus dargestellt. Der Griff 52, wie er in Figur 4 und 7 dargestellt ist, ist nach vorn bewegt und ruht angrenzend an einen Frontbereich 110 des Halters 54. Wenn sich der Griff 52 in dieser Stellung befindet, ist der Stift 60 derart positioniert, dass er in der vorderen Kerbe 64 einrastet, wie dies in Figur 7 gezeigt wird. Wenn diese Bewegung des Griffs 52 nach vorn auftritt, bewegen sich die Hebel 34, 36 in die entgegengesetzte oder nach rückwärts gerichtete Richtung.

Jeder der Abweiser 82 weist eine Verlängerung 112 auf. Wenn die Abweiser 70, 72 und 74 in ihre geschlossene Stellung gezogen werden, erstrecken sie sich winklig oder stehen von den vorderen Abweisern 76, 78 und 80 ab und fluchten mit den Verlängerungen 112 der rückwärtigen Abweiser 82. Darüber hinaus blockiert der Abweiser 74 die Auswurföffnung 76. Nachdem eine derartige Ausrichtung und Blockade aufgetreten ist, ist der Pfad "A" im Wesentlichen geschlossen, um einen Betrieb des Mähwerks 18 in seinem Mulchmodus zu erlauben.

Wie es weiter in Figur 5 gezeigt wird, ist der die Auswurföffnung 67 verschließende Abweiser 74 vorzugsweise in der Art einer einzelnen schwenkbaren Platte ausgebildet, welche über ein Scharnier mit dem Mähwerk 18 verbunden ist. Eine Stange 114 ist mit ihrem seiner Endbereiche mit dem Abweiser 72 und mit ihrem anderen Endbereich mit dem Abweiser 74 verbunden. Aufgrund dieser Verbindung kann der Abweiser 74 nach unten bewegt werden, um die Auswurföffnung 67 zu verschließen, wenn die Abweiser 70, 72 in ihre geschlossene Stellung bewegt werden. Wenn sich die Abweiser 70, 72 und 74 in ihrer geschlossenen Stellung befinden, ist eine Bewegung von Mähgut entlang des Pfads "A" beschränkt. Diese Begrenzung zwingt geschnittenes Mähgut dazu, von den Abweisern 70, 72 und 74 und den Abweisern 78, 80 und 82 in den Schnittkreis der Messerbalken 90, 92, 94 hinein abgelenkt zu werden. Nach dem Ablenken wird das Mähgut nochmals geschnitten und dann nach unten in Richtung des Untergrunds gedrängt.

Wie dies ebenfalls in Figur 5 dargestellt wird, ist jede der Verlängerungen 112 etwas niedriger als die Platten 104 und die volle Länge ihrer Verlängerungen 116, wie dies bei 118 dargestellt ist. Ein derartiger Höhenunterschied verhindert einen Kontakt zwischen den Messerbalken 90, 92, 94 und den Verlängerungen 112 und 116, wenn die Messerbalken rotieren, ohne die Mulchfähigkeit der jeweiligen Mähkammer wesentlich zu beeinträchtigen.

Darüber hinaus bewegen sich, wenn die Abweiser 70 und 72 sich von ihrer Mulch- in ihre Auswurfstellung bewegen, ihre Platten 102 zuerst zum Bug 106 des Mähwerks 18. Die Platten 104 folgen und überlappen oder liegen auf den Platten 102, wie dies in Figur 3 gezeigt wird. Wenn diese Überlappung auftritt, wird entlang der Länge der Abweiser 70 und 72 eine im Wesentlichen durchgängige Oberfläche zur Verfügung gestellt, entlang welcher Mähgut fließen kann, ohne Kanten oder gegenüberliegende Oberflächen davon zu berühren. Wenn die Platten 104 in Richtung des Hecks 106 des Mähwerks 18 zuerst zusammengeklappt werden würden, würden die Platten 102 eine Kante bilden, welche eine schmale Vertiefung bilden würde, in welcher sich Mähgut ansammeln und eine ordnungsgemäße Funktion der Abweiser 70, 72 stören könnte. Eine derartige Überlappung würde auch eine Kante 119 entlang des Endbereichs der Platte 102, wie sie in Figur 3 gezeigt wird, liefern, die dem Mähgutfluss in Richtung der Auswurföffnung 67 entgegengesetzt wäre und würde dadurch eine ordnungsgemäße Zirkulation in der/den Mähkammer (n) unterbrechen. Durch ein Zurückziehen der Abweiser 70, 72 in Richtung des Bugs 106 des Mähwerks 18 in der beschriebenen Reihenfolge, sind die Verlängerungen 116 in der Lage Mähgut in den Pfad "A" hinein abzuweisen. Dieses Abweisen hindert Mähgut daran, hinter die Abweiser 70, 72 zu gelangen. Darüber hinaus würden die Platten 104, wenn sie zuerst weggefaltet würden, um von den Platten 102 überlappt zu werden, bewirken, dass die Verlängerungen 116 der Platten 104 eine große Lücke bilden würden, in welcher Mähgut gesammelt würde, anstatt in der/den Mähkammer (n) zirkuliert zu werden. Auf diese Weise soll deutlich gemacht werden, dass die in Verbindung mit der Überlappung der Abweiser 70 und 72 beschriebenen Vorteile dazu beitragen, eine einwandfreie Zirkulation von Mähgut in der/den Mähkammer(n) zu erlauben. Darüber hinaus wird eine gute Funktion der Abweiser 70, 72 und ein einwandfreier Auswurf von Mähgut ermöglicht.

Wie es in den Figuren 3 und 5 dargestellt wird, ist ein winkliger Halter 120 an der Unterseite des Mähwerks 18 angebracht und wirkt als ein Anschlag, welcher eine unbeabsichtigt Bewegung der Abweiser 70, 72 in den Schnittkreis der rotierende Messerbalken 90, 92 und 94 hinein verhindert.

Auf diese Weise wird eine Mähwerk 18 zu Verfügung gestellt, welches zwischen einem Auswurfmodus und einem Mulchmodus umstellbar ist. Durch ein Zur-Verfügung-Stellen eines derartigen Mähwerks 18 kann eine Bedienungsperson es vermeiden, separates Mulchzubehör an einem üblichen Auswurfmähwerk anbringen oder entfernen zu müssen. Entsprechend muss die Bedienungsperson keine zusätzliche Zeit und/oder Geld aufwänden, wenn ein Mäheinsatz in einem dieser Modi gewünscht wird, wenn es die Bedingungen erfordern.

Nach der Beschreibung der bevorzugten Ausführungsform, wird es deutlich geworden sein, dass mannigfaltige Modifikationen durchgeführt werden können, ohne von dem Schutzbereich der Erfindung, wie er durch die folgenden Ansprüche bestimmt wird, abzuweichen.

## Patentansprüche

1. Mähwerk mit wenigstens einer Auswurföffnung (67) und wenigstens zwei Mähkammern (84, 86, 88), in denen jeweils wenigstens ein Mähbalken (90, 92, 94) derart anordenbar ist, dass er um eine zumindest im Wesentlichen vertikale Achse rotieren kann, sowie einer Mehrzahl von Abweisern (70, 72, 74, 76, 78, 80, 82), die mit dem Mähwerk (18) derart beweglich verbunden sind, dass sie eine erste Stellung, in der die Mähkammern (84, 86, 88) umfangsmäßig zumindest im Wesentlichen geschlossen sind, und in eine zweite Stellung einnehmen können, in der zumindest ein Strom von Mähgut von einer Mähkammer (84, 86, 88) in eine andere Mähkammer (84, 86, 88) sowie ein Auswurf von Mähgut durch die Auswurföffnung (67) möglich ist, **dadurch gekennzeichnet, dass** die beweglichen Abweiser (72, 74, 76, 78, 80) mit einer Stellvorrichtung (32) derart wirksam verbunden sind, dass durch diese eine Mehrzahl der Abweiser (70, 72, 74, 76, 78, 80, 82) zwischen offenen und geschlossenen Positionen bewegt werden können.

2. Mähwerk nach Anspruch 1, **dadurch gekennzeichnet, dass** zumindest einer der beweglichen Abweiser (70, 72, 74, 76, 78, 80) in seiner zweiten Stellung mit einer Außenwand des Mähwerks (18) bzw. der Mähkammern (84, 86, 88) zumindest im Wesentlichen fluchtet.

3. Mähwerk nach Anspruch 1 oder 2, **dadurch gekennzeichnet, dass** die beweglichen Abweiser (70, 72, 74, 76, 78, 80) sich in ihrer zweiten Stellung vorzugsweise derart überlappen, dass sie keine der Auswurfrichtung des Mähwerks (18) entgegengerichtete Kante (119) bilden.

4. Mähwerk nach einem oder mehreren der vorherigen Ansprüche, **dadurch gekennzeichnet, dass** die Stellvorrichtung (32) manuell betätigbar ist.

5. Mähwerk nach einem oder mehreren der vorherigen Ansprüche, **dadurch gekennzeichnet, dass** die beweglichen Abweiser (70, 72, 74, 76, 78, 80) zumindest teilweise gelenkig miteinander und/oder mit dem Mähwerk (18) verbunden sind.

6. Mähwerk nach einem oder mehreren der vorherigen Ansprüche, **dadurch gekennzeichnet, dass** die Stellvorrichtung (32) einen Griff (52) und wenigstens ein Paar von Hebeln (34, 36) aufweist, welches über wenigstens ein Gestänge (48) verbunden ist, und mit dem Griff (52) derart zusammenwirkt, dass eine Bewegung des Griffs (52) beide Hebel (34, 36) bewegt.

7. Mähwerk nach Anspruch 6, **dadurch gekennzeichnet, dass** die Hebel (34, 36) jeweils mit wenigstens einem der beweglichen Abweiser (70, 72, 74, 76, 78, 80) derart wirksam verbunden sind, dass die beweglichen Abweiser (70, 72, 74, 76, 78, 80) durch eine Bewegung des Griffs (52) zumindest in ihre erste oder ihre zweite Stellung gebracht werden können.

8. Mähwerk nach Anspruch 6 oder 7, **dadurch gekennzeichnet, dass** der Griff (52) derart durch einen Halter (54) geführt wird, dass er in wenigstens einer Stellung festlegbar ist.

## Claims

1. Mower having at least one discharge opening (67) and at least two mowing chambers (84, 86, 88), in which respectively at least one cutter bar (90, 92, 94) can be disposed in such a way that it can rotate about an at least substantially vertical axis, and having a plurality of deflectors (70, 72, 74, 76, 78, 80, 82), which are movably connected to the mower (18) in such a way that they can assume a first setting, in which the mowing chambers (84, 86, 88) are at least substantially closed in terms of their periphery, and a second setting, in which at least one stream of cuttings from one mowing chamber (84, 86, 88) into another mowing chamber (84, 86, 88), as well as a discharge of cuttings through the discharge opening (67), is possible, **characterized in that** the movable deflectors (72, 74, 76, 78, 80) are operatively connected to a control apparatus (32) in such a way that a plurality of deflectors (70, 72, 74, 76, 78, 80, 82) can be moved between open and closed positions by the said control apparatus.

2. Mower according to Claim 1, **characterized in that** at least one of the movable deflectors (70, 72, 74, 76, 78, 80), in its second setting, is at least substantially aligned with an outer wall of the mower (18) or of the mowing chambers (84, 86, 88).

3. Mower according to Claim 1 or 2, **characterized in that** the movable deflectors (70, 72, 74, 76, 78, 80), in their second setting, preferably overlap in such a way that they do not form an edge (119) oppositely directed to the discharge direction of the mower (18).

4. Mower according to one or more of the previous claims, **characterized in that** the control apparatus (32) can be actuated manually.

5. Mower according to one or more of the previous claims, **characterized in that** the movable deflectors (70, 72, 74, 76, 78, 80) are connected at least partially articulately to one another and/or to the mower (18).

6. Mower according to one or more of the previous claims, **characterized in that** the control apparatus (32) has a handle (52) and at least one pair of levers (34, 36), connected by at least one link rod (48), and cooperates with the handle (52) in such a way that a movement of the handle (52) moves both levers (34, 36).

7. Mower according to Claim 6 , **characterized in that** the levers (34, 36) are respectively operatively connected to at least one of the movable deflectors (70, 72, 74, 76, 78, 80) in such a way that the movable deflectors (70, 72, 74, 76, 78, 80) can be brought by a movement of the handle (52) at least into their first or their second setting.

8. Mower according to Claim 6 or 7, **characterized in that** the handle (52) is guided through a mounting bracket (54) in such a way that it can be fixed in at least one setting.

## Revendications

1. Dispositif de fauchage comportant au moins une ouverture d'éjection (67) et au moins deux chambres de coupe (84, 86, 88), dans chacune desquelles au moins une barre de coupe (90, 92, 94) peut être agencée de telle sorte qu'elle peut tourner autour d'un axe au moins sensiblement vertical, ainsi qu'une pluralité de déflecteurs (70, 72, 74, 76, 78, 80, 82), qui sont reliés de manière mobile au dispositif de fauchage (18) de telle sorte qu'ils peuvent être amenés dans une première position, dans laquelle les chambres de coupe (84, 86, 88) sont au moins sensiblement fermées sur le pourtour, et dans une deuxième position, dans laquelle sont possibles au moins un flux de végétaux coupés d'une chambre de coupe (84, 86, 88) dans une autre chambre de coupe (84, 86, 88), ainsi qu'une éjection des végétaux coupés à travers l'ouverture d'éjection (67), **caractérisé en ce que** les déflecteurs (72, 74, 76, 78, 80) mobiles sont reliés de manière active à un dispositif de réglage (32), de telle sorte que celui-ci permet de déplacer une pluralité des déflecteurs (70, 72, 74, 76, 78, 80, 82) entre des positions ouvertes et des positions fermées.

2. Dispositif de fauchage selon la revendication 1, **caractérisé en ce qu'**au moins un des déflecteurs (70, 72, 74, 76, 78, 80) mobiles, dans sa deuxième position, est au moins sensiblement aligné avec une paroi extérieure du dispositif de fauchage (18), plus précisément des chambres de coupe (84, 86, 88).

3. Dispositif de fauchage selon la revendication 1 ou 2, **caractérisé en ce que** les déflecteurs (70, 72, 74, 76, 78, 80) mobiles, dans leur deuxième position, se chevauchent de préférence de telle sorte qu'ils ne forment pas de bord orienté dans le sens opposé à la direction d'éjection du dispositif de fauchage (18).

4. Dispositif de fauchage selon une ou plusieurs des revendications précédentes, **caractérisé en ce que** le dispositif de réglage (32) peut être actionné manuellement.

5. Dispositif de fauchage selon une ou plusieurs des revendications précédentes, **caractérisé en ce que** les déflecteurs (70, 72, 74, 76, 78, 80) mobiles sont assemblés, au moins en partie de manière articulée, les uns avec les autres et/ou avec le dispositif de fauchage (18).

6. Dispositif de fauchage selon une ou plusieurs des revendications précédentes, **caractérisé en ce que** le dispositif de réglage (32) comporte un manche (52) et au moins une paire de leviers (34, 36), qui sont reliés entre eux par l'intermédiaire d'au moins un tringlage (48) et coopèrent avec le manche (52) de telle sorte qu'un mouvement du manche (52) déplace les deux leviers (34, 36).

7. Dispositif de fauchage selon la revendication 6, **caractérisé en ce que** les leviers (34, 36) sont reliés de manière active chacun avec au moins un des déflecteurs (70, 72, 74, 76, 78, 80) mobiles, de telle sorte que les déflecteurs (70, 72, 74, 76, 78, 80) mobiles peuvent être amenés dans leur première ou leur deuxième position par l'intermédiaire d'un mouvement du manche (52).

8. Dispositif de fauchage selon la revendication 6 ou 7, **caractérisé en ce que** le manche (52) est guidé à travers une console (54) de telle sorte qu'il peut être fixé dans au moins une position.
